# EUROPÄISCHE PATENTSCHRIFT

(11) **EP 3 945 664 B1**
(45) Veröffentlichungstag und Bekanntmachung des Hinweises auf die Patenterteilung: **03.07.2024**
(21) Anmeldenummer: 20188646.2
(22) Anmeldetag: 30.07.2020
(51) Int. Cl.: H02K 15/12

(54) **IMPRÄGNIEREN EINES AKTIVTEILS EINER ELEKTRISCHEN MASCHINE IN ABHÄNGIGKEIT VON NUTLÄNGE UND/ODER FÜLLGRAD**
IMPREGNATION OF AN ACTIVE PART OF AN ELECTRIC MACHINE DEPENDENT ON GROOVE LENGTH AND/OR FILL LEVEL
IMPRÉGNATION D'UNE PARTIE ACTIVE D'UNE MACHINE ÉLECTRIQUE EN FONCTION DE LA LONGUEUR DE LA RAINURE ET/OU DU DEGRÉ DE REMPLISSAGE

(43) Veröffentlichungstag der Anmeldung: 02.02.2022
(73) Patentinhaber: Innomotics GmbH, 90441 Nürnberg (DE)
(72) Erfinder: Katzenberger, Tobias, 97631 Bad Königshofen STT Untereßfeld (DE); Plochmann, Bastian, 91413 Neustadt an der Aisch (DE)
(74) Vertreter: Siemens Patent Attorneys

(56) Entgegenhaltungen:
- EP-A1- 3 001 544
- EP-A2- 0 509 366
- CN-B- 107 276 342
- DE-A1-102017 001 939

## Beschreibung

Die vorliegende Erfindung geht aus von einer Imprägnieranlage für ein Aktivteil einer elektrischen Maschine, wobei das Aktivteil eine Mehrzahl von Nuten aufweist, die sich in einer für die Nuten einheitlichen Richtung über eine Nutlänge erstrecken, wobei in den Nuten Wicklungen eines Wicklungssystems des Aktivteils angeordnet sind, die an Nutenden in Form von Wicklungsköpfen aus den Nuten herausragen,
- wobei die Imprägnieranlage mindestens eine Düse aufweist, mittels derer eine Imprägnierlösung auf die Wicklungen des Wicklungssystems aufgeträufelt wird.

Die vorliegende Erfindung geht weiterhin aus von einer elektrischen Maschine,
- wobei die elektrische Maschine ein Aktivteil aufweist,
- wobei das Aktivteil eine Mehrzahl von Nuten aufweist, die sich in einer für die Nuten einheitlichen Richtung über eine Nutlänge erstrecken,
- wobei in den Nuten Wicklungen eines Wicklungssystems des Aktivteils angeordnet sind, die an Nutenden in Form von Wicklungsköpfen aus den Nuten herausragen,
- wobei die Wicklungen mit einer ausgehärteten Imprägnierlösung imprägniert sind.

Bei elektrischen Maschinen, beispielsweise Elektromotoren, werden die Wicklungen für die Aktivteile (also zumindest für den Stator, in manchen Fällen auch für den Rotor) in der Regel mittels Runddrähten hergestellt, die mit einem Drahtlack versehen sind. In manchen Fällen werden die Wicklungen direkt auf das jeweilige Aktivteil gewickelt. In anderen Fällen werden die Wicklungen zunächst auf Hilfskomponenten gewickelt und sodann in das jeweilige Aktivteil eingezogen. In beiden Fällen entspricht oftmals der Drahtlack der Hauptisolation der elektrischen Maschine. Dies gilt insbesondere bei Niederspannungsmaschinen (Nennspannung maximal 1000 V).

Zur mechanischen Verfestigung sowie zum Schutz vor äußeren Einflüssen werden die Wicklungen der Aktivteile weiterhin imprägniert. Das Aufbringen der Imprägnierung ist fertigungstechnisch oftmals aufwendig. Konkret wird ein flüssiges Reaktivharz (beispielsweise ein Epoxidharz oder ein Polyesterharz) auf die Wicklungen aufgebracht, beispielsweise durch Tauchen, Tauchrollieren oder Träufeln. Danach wird das Reaktivharz geliert und letztendlich gehärtet. Hierfür wird erhebliche Zeit benötigt. In vielen Fällen werden weiterhin erhöhte Temperaturen benötigt. Die nötigen Temperaturen können durch Heißluft, durch Bestromen der Wicklungen, durch Infrarot- oder Ultraviolettstrahlung oder durch induktive Erwärmung erzeugt werden.

Bei herkömmlichen Imprägnieranlagen werden die elektrischen Maschinen in ihren verschiedenen Varianten und Ausgestaltungen zunächst in einer Pufferzone gesammelt und danach gruppenweise in sogenannten Batches in der Imprägnieranlage imprägniert.

Aus der DE 10 2017 001939 A1, der EP 3 001 544 A1 und der EP 0 509 366 A2 sind Imprägnieranlagen beziehungsweise imprägnierte Aktivteile für elektrische Maschinen bekannt.

In der europäischen Patentanmeldung 20 159 310.0 der Anmelderin, eingereicht am 25.02.2020, internes Aktenzeichen der Anmelderin 202003026, ist eine neuartige Methode erläutert, bei welcher ein aus mehreren Komponenten bestehendes Gießharz auf die Wicklungen des Aktivteils aufgebracht wird. Eine der Komponenten des Gießharzes ist ein Epoxidharz oder ein Polyesterharz, mindestens eine weitere Komponente ein Härter. Mittels der in der genannten Patentanmeldung erläuterten Vorgehensweise sind eine Imprägnierung und anschließende Gelierung des Gießharzes bei Raumtemperatur oder bei gegenüber Raumtemperatur nur geringfügig erhöhten Temperaturen möglich. Es ist lediglich eine Vorheizung des Aktivteils erforderlich. Die Gelierung erfolgt innerhalb weniger Minuten bis - je nach Material des Gießharzes - maximal 1 Stunde während der passiven Abkühlung des Aktivteils auf Raumtemperatur. Das in der genannten Patentanmeldung beschriebene Verfahren ist prozesstechnisch sehr vorteilhaft, da sowohl Energiekosten gesenkt werden können als auch kurze Taktzeiten erreicht werden können. Die genannte Patentanmeldung ist am Anmeldetag der vorliegenden Erfindung nicht veröffentlicht und stellt daher keinen allgemein zugänglichen Stand der Technik dar.

Die relativ niedrigen Temperaturen des Aktivteils stellen bei der zuletzt erläuterten Vorgehensweise jedoch zugleich auch eine besondere Herausforderung für den Imprägniervorgang dar, da die Imprägnierlösung bei niedrigen Temperaturen eine relativ hohe Viskosität aufweist und somit trotz der positiv wirkenden Kapitalkräfte nicht leicht, einfach und schnell in den Nuten entlang fließt.

Es ist zwar denkbar, die Eigenschaften der Imprägnierlösung (also in der Regel des Gießharzes) innerhalb gewisser Grenzen an die geometrischen Eigenschaften des Aktivteils anzupassen, insbesondere an die Nutlänge. Beispielsweise kann eine Imprägnierlösung mit einer zu Beginn relativ hohen Viskosität und/oder einer relativ kurzen Gelierzeit (das ist die Zeit, die das Gießharz zum Gelieren benötigt) verwendet werden, wenn die Nutlänge klein ist, und umgekehrt eine Imprägnierlösung mit einer zu Beginn relativ niedrigen Viskosität und/oder einer relativ langen Gelierzeit verwendet werden, wenn die Nutlänge groß ist. Diese Vorgehensweise erweist sich aber als nicht mehr praktikabel, wenn verschiedene Aktivteile imprägniert werden sollen, deren Nutlängen deutlich voneinander verschieden sind. Wird in diesem Fall eine Imprägnierlösung verwendet, die eine zu Beginn relativ hohe Viskosität und/oder eine relativ kurze Gelierzeit aufweist, so verhindert die im Laufe der Zeit stetig ansteigende Viskosität, dass die Imprägnierlösung bei den Aktivteilen mit großen Nutlängen die gesamte Nut durchtränkt. Es zeigt sich das Ergebnis, dass die Nuten nur in ihren Außenbereichen, also in der Nähe der Wickelköpfe, befüllt sind, in einem Mittelbereich der Nut jedoch eine nur mangelhafte oder im äußersten Fall gar keine Imprägnierung erfolgt ist. Wird umgekehrt eine Imprägnierlösung verwendet, die eine zu Beginn relativ niedrige Viskosität und/oder eine relativ lange Gelierzeit aufweist, so wirkt sich dies jedoch nachteilig insbesondere auf die Taktzeit der Imprägnieranlage aus.

In der Praxis wird oftmals eine Imprägnierlösung verwendet, mittels derer eine vollständige Imprägnierung von Aktivteilen mit großen Nutlängen möglich ist. Die hiermit verbundenen Produktivitätsnachteile werden in Kauf genommen. Alternativ wird in der Praxis manchmal eine Imprägnierlösung verwendet, welche weder für Aktivteile mit kleinen Nutlängen noch für Aktivteile mit großen Nutlängen optimal ist, sondern einen Kompromiss bildet. Die hiermit verbundene Verschlechterung der Imprägnierung für Aktivteile mit großen Nutlängen sowie die ebenfalls hiermit verbundene Produktivitätsverringerung für Aktivteile mit kleineren Nutlänge werden in Kauf genommen.

Aus dem Konflikt, dass ein und dieselbe Imprägnierlösung nicht sowohl für Aktivteile mit großer Nutlänge als auch für Aktivteile mit kleineren Nutlänge gleich gut geeignet ist, entstehen zwei Nachteile.

Der eine Nachteil besteht darin, dass Aktivteile mit voneinander verschiedenen Nutlängen nur schlecht auf einer einheitlichen Imprägnieranlage mit einer einheitlichen Imprägnierlösung verarbeitet werden können oder die Eigenschaften der Imprägnierlösung an das Aktivteil mit der größten Nutlänge angepasst werden müssen. Hierdurch entsteht für die Aktivteile mit kleineren Nutlängen ein Verlust an Effektivität.

Theoretisch ist es denkbar, die Aktivteile in einer Pufferzone zu sammeln und dann gruppenweise Aktivteile mit im wesentlichen gleichen Nutlängen zu imprägnieren. In diesem Fall wäre jedoch ein effizienter Betrieb der Imprägnieranlage nicht möglich, weil Förderleitungen für die verschiedenen Komponenten der Imprägnierlösung gewechselt werden müssten und weiterhin andere Bestandteile wie beispielsweise Pumpen, Druckmesser und Durchflussmesser aufwendig gereinigt werden müssten, um Verunreinigungen einer jeweils verwendeten Imprägnierlösung durch die jeweils zuvor verwendete Imprägnierlösung zu vermeiden.

Der andere Nachteil besteht darin, dass bei Aktivteilen mit großen Nutlängen stets eine Imprägnierlösung mit deutlich verringerter Reaktivität verwendet werden muss, um ein Imprägnieren der jeweiligen Wicklung über die gesamte Nutlänge zu gewährleisten. Derartige Imprägnierlösungen weisen jedoch bei Raumtemperatur eine sehr große Gelierzeit auf. Teilweise ist sogar keine vollständige Gelierung und Härtung möglich. Das Anlagenkonzept einer nur leichten Vorwärmung der Aktivteile in Verbindung mit einer sich an das Imprägnieren anschließenden passiven Abkühlung müsste also verworfen werden.

Die Aufgabe der vorliegenden Erfindung besteht darin, Möglichkeiten zu schaffen, mittels derer Aktivteile von elektrischen Maschinen unabhängig von der Nutlänge der Nuten effizient und zuverlässig imprägniert werden können.

Die Aufgabe wird durch eine Imprägnieranlage mit den Merkmalen des Anspruchs 1 gelöst. Des weiteren wird die Aufgabe auch durch eine Imprägnieranlage mit den Merkmalen des Anspruchs 2 gelöst. Eine vorteilhafte Ausgestaltung der Imprägnieranlage ist Gegenstand des abhängigen Anspruchs 3. Erfindungsgemäß wird eine Imprägnieranlage der eingangs genannten Art dadurch ausgestaltet,
- dass die Imprägnieranlage eine der Düse vorgeordnete Mischstufe aufweist, der über Förderleitungen Komponenten der Imprägnierlösung zugeführt werden, in der die Komponenten zu der Imprägnierlösung gemischt werden und von der aus sodann die Imprägnierlösung der Düse zugeführt wird,
- dass den Förderleitungen Fördereinrichtungen zugeordnet sind, mittels derer die Komponenten in den Förderleitungen gefördert werden, und
- dass die Imprägnieranlage eine Steuereinrichtung aufweist, von der die Fördereinrichtungen derart gesteuert werden,
dass Verhältnisse der über die Förderleitungen geförderten Komponenten in Abhängigkeit von der Nutlänge der Nuten und/oder einem Füllgrad der Nuten eingestellt werden.

Dadurch können der Mischstufe die einzelnen Komponenten der Imprägnierlösung nach Bedarf zugeführt werden. Hierbei ist es möglich, dass bestimmte Komponenten sich gegenseitig ausschließen. Wenn also beispielsweise der Mischstufe eine Komponente A und eine Komponente B zugeführt werden, so wird der Mischstufe in diesem Fall nicht eine Komponente C zugeführt. Wenn der Mischstufe hingegen die Komponenten A und C zugeführt werden, so wird der Mischstufe in diesem Fall nicht die Komponente B zugeführt wird. Ebenso ist es aber auch möglich, dass die Komponenten sich nicht gegenseitig ausschließen. In diesem Fall ist es beispielsweise möglich, dass der Mischstufe zwar stets die Komponente A zugeführt wird, dass der Mischstufe aber weiterhin die Komponente B, die Komponente C oder eine Mischung der Komponenten B und C zugeführt wird.

Einer ersten erfindungsgemäßen Ausgestaltung nach weist die Mischstufe einen (1) Vormischer und einen (1) Nachmischer auf. In diesem Fall werden dem Vormischer eine erste und eine zweite Komponente der Imprägnierlösung zugeführt, die von dem Vormischer zu einer Zwischenlösung gemischt werden. Dem Nachmischer werden in diesem Fall die Zwischenlösung und mindestens eine dritte Komponente der Imprägnierlösung zugeführt, die von dem Nachmischer zu der Imprägnierlösung gemischt werden. Diese Ausgestaltung kann insbesondere dann verwendet werden, wenn die beiden dem Vormischer zugeführten Komponenten untereinander gut verträglich sind, insbesondere nicht miteinander reagieren, sondern erst nach Mischung mit der dem Nachmischer zugeführten Komponente gelieren.

Einer zweiten erfindungsgemäßen Ausgestaltung nach weist die Mischstufe einen ersten Vormischer, einen zweiten Vormischer und einen Nachmischer auf. In diesem Fall werden dem ersten Vormischer eine erste und eine dritte Komponente der Imprägnierlösung zugeführt, die von dem ersten Vormischer zu einer ersten Zwischenlösung gemischt werden. Dem zweiten Vormischer werden eine zweite und die dritte Komponente der Imprägnierlösung zugeführt, die von dem zweiten Vormischer zu einer zweiten Zwischenlösung gemischt werden. Dem Nachmischer werden in diesem Fall die erste und die zweite Zwischenlösung zugeführt, die von dem Nachmischer zu der Imprägnierlösung gemischt werden. Diese Ausgestaltung kann insbesondere dann verwendet werden, wenn die erste und eine zweite Komponente der Imprägnierlösung nicht gut miteinander verträglich sind, beispielsweise miteinander reagieren.

In einer besonders bevorzugten Ausgestaltung ist die Düse zumindest in der für die Nuten einheitlichen Richtung relativ zum Aktivteil bewegbar und ist weiterhin die Steuereinrichtung derart ausgebildet, dass sie eine Position der Düse relativ zu den Nuten in Abhängigkeit von dem Füllgrad variiert. Dadurch kann der Imprägniervorgang optimiert werden.

Bei der erfindungsgemäßen Imprägnieranlage ist es möglich, die Zusammensetzung der Imprägnierlösung im laufenden Betrieb zu ändern. Dadurch ist es möglich, dass bei einer elektrischen Maschine der eingangs genannten Art die ausgehärtete Imprägnierlösung im Bereich der Wicklungsköpfe eine erste chemische Zusammensetzung und in einem Mittelbereich der Nuten eine von der ersten chemischen Zusammensetzung verschiedene zweite chemische Zusammensetzung aufweist oder im Bereich des Wicklungskopfes an einem ersten Nutende der Nuten eine erste chemische Zusammensetzung und im Bereich des Wicklungskopfes an einem zweiten Nutende der Nuten eine von der ersten chemischen Zusammensetzung verschiedene zweite chemische Zusammensetzung aufweist.

Je nach Art der Imprägnierlösung ist es möglich, dass die erste und die zweite chemische Zusammensetzung dieselben chemischen Komponenten in voneinander verschiedenen stöchiometrischen Verhältnissen aufweisen. Alternativ ist es möglich, dass die erste chemische Zusammensetzung aus einer ersten und einer dritten chemischen Komponente besteht und dass die zweite chemische Zusammensetzung aus einer zweiten und der dritten chemischen Komponente besteht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Längsschnitt durch eine elektrische Maschine,
- FIG 2: einen Schnitt durch die elektrische Maschine von FIG 1 gemäß einer Linie II-II in FIG 1,
- FIG 3: einen Schnitt durch die elektrische Maschine der FIG 1 und 2 längs einer Linie III-III in FIG 2,
- FIG 4: eine Imprägnieranlage,
- FIG 5 bis 8: Ablaufdiagramme,
- FIG 9: einen Stator und Düsen,
- FIG 10 bis 12: Mischstufen und
- FIG 13 bis 18: jeweils einen Schnitt durch eine Statornut.

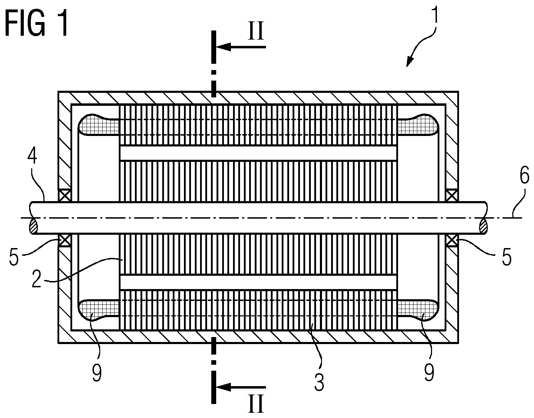

Gemäß FIG 1 weist eine rotatorische elektrische Maschine 1 einen Rotor 2 und einen Stator 3 auf. Der Rotor 2 ist auf einer Rotorwelle 4 angeordnet. Die Rotorwelle 4 ist in Lagern 5 gelagert, so dass die Rotorwelle 4 um eine Rotationsachse 6 rotierbar ist.

Soweit nachfolgend die Begriffe "axial", "radial" und "tangential verwendet werden, bedeutet "axial" eine Richtung parallel zur Rotationsachse 6. "Radial" ist eine Richtung orthogonal zur Axialrichtung direkt auf die Rotationsachse 6 zu bzw. von ihr weg. "Tangential" ist eine Richtung, die sowohl orthogonal zur Axialrichtung als auch orthogonal zur Radialrichtung gerichtet ist. Tangential ist also eine Richtung, die bei einer konstanten Axialposition und in einem konstanten radialen Abstand von der Rotationsachse 6 kreisförmig um die Rotationsachse 6 herum gerichtet ist.

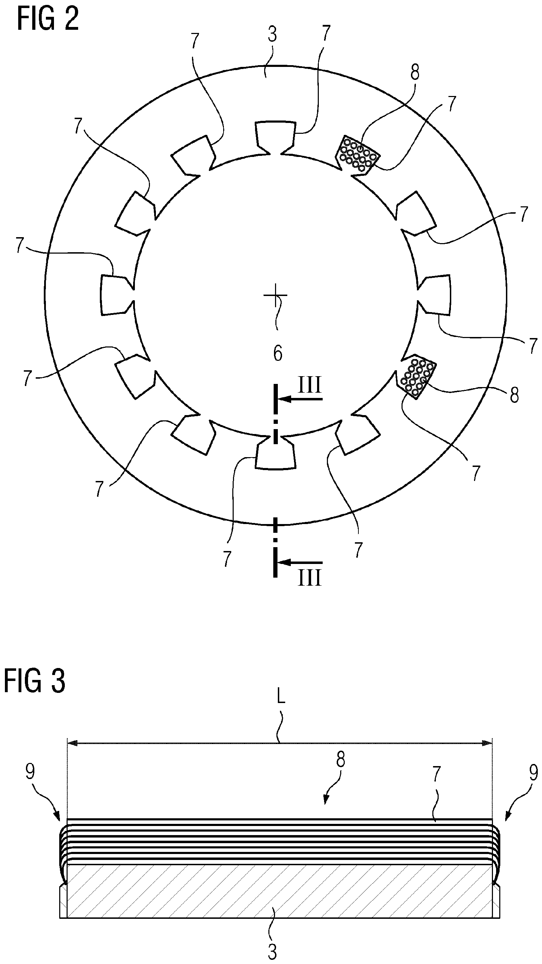

Der Stator 3 weist - siehe insbesondere die FIG 2 und 3 - eine Mehrzahl von Statornuten 7 auf. Die Statornuten 7 erstrecken sich parallel zur Rotationsachse 6 der elektrischen Maschine 1 und damit in einer für die Statornuten 7 einheitlichen Richtung. Sie sind kreisförmig um die Rotationsachse 6 herum verteilt angeordnet. Die Statornuten 7 erstrecken sich in Axialrichtung über eine Nutlänge L. In den Statornuten 7 sind die Wicklungen 8 eines Statorwicklungssystems angeordnet. In FIG 2 ist dies jedoch nur für ein Paar von Statornuten 7 dargestellt. In den Statornuten 7 sind die Hauptabschnitte der Wicklungen 8 angeordnet. Wicklungsköpfe 9 der Wicklungen 8 ragen, wie allgemein üblich, gemäß FIG 1 an den beiden axialen Enden des Stators 3 über den Stator 3 hinaus.

Der Stator 3 ist ein Aktivteil der elektrischen Maschine 1. Es ist ein typisches Beispiel eines Aktivteils im Sinne der vorliegenden Erfindung. In Verbindung mit dem Stator 3 wird die vorliegende Erfindung näher erläutert. Die vorliegende Erfindung ist aber nicht auf den Stator 3 einer elektrischen Maschine 1 beschränkt. In manchen Fällen weist beispielsweise auch der Rotor 2 Nuten auf, in denen ein Rotorwicklungssystem angeordnet ist. In diesem Fall kann auch der Rotor 2 ein Aktivteil im Sinne der vorliegenden Erfindung sein. Weiterhin können auch Wicklungen tragende Teile von elektrischen Linearmotoren oder Transformatoren Aktivteile im Sinne der vorliegenden Erfindung sein. Wenn daher nachstehend die Vorgehensweise für den Stator 3 erläutert wird, sollte stets mit bedacht werden, dass die entsprechenden Ausführungen auch für anders ausgestaltete Aktivteile gültig sind.

Zum Herstellen des Stators 3 wird in üblicher Weise zunächst der Stator 3 als solcher (also noch ohne das Wicklungssystem) hergestellt. Beispielsweise kann der Stator 3, wie allgemein üblich, aus Blechen hergestellt werden, die zu einem Statorblechpaket verbunden werden. Sodann werden in ebenfalls üblicher Weise die Wicklungen 8 des Wicklungssystems in den Stator 3 eingebracht. Beispielsweise kann ein direktes Bewickeln erfolgen. Auch ist ein vorheriges Wickeln auf einen Formkörper mit einem nachfolgenden Einziehen der bereits hergestellten Wicklungen 8 in den Stator 3 möglich. In beiden Fällen kann das Wicklungssystem in Form einer sogenannten wilden Wicklung oder in Form einer gelegten Wicklung in den Stator 3 eingebracht werden.

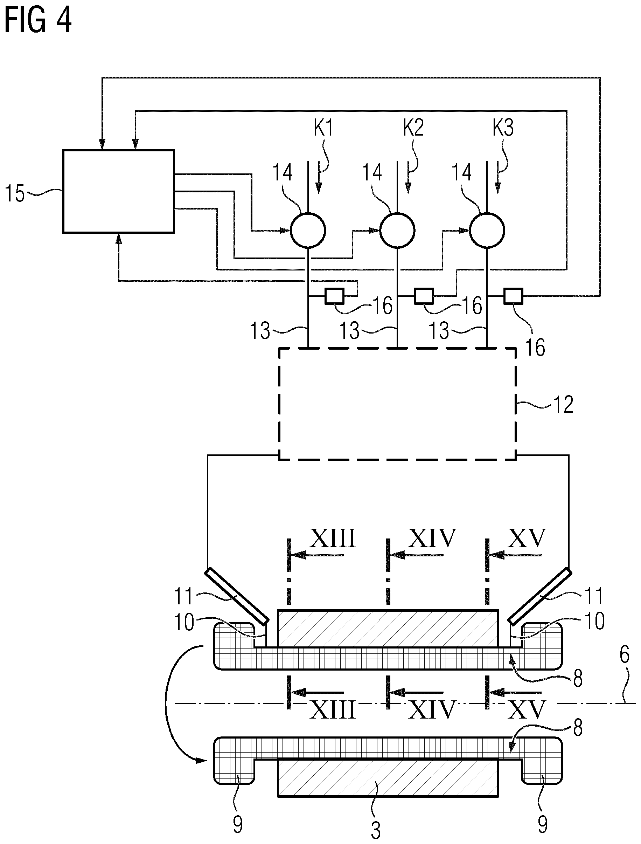

Ausgehend von diesem Zustand, der auf völlig herkömmliche Art und Weise erreicht wird, wird der Stator 3 (einschließlich des Wicklungssystems) einer Imprägnieranlage zugeführt. Die Imprägnieranlage einschließlich Stator 3 ist sehr schematisch in FIG 4 dargestellt.

Entsprechend der Darstellung in FIG 4 ist der Stator 3 in der Imprägnieranlage derart angeordnet, dass die Rotationsachse 6 horizontal verläuft. Diese Vorgehensweise ist insbesondere dann sinnvoll, wenn, wie in FIG 4 dargestellt, eine Imprägnierlösung 10 an beiden Statorenden auf die Wicklungen 8 aufgebracht wird. Alternativ kann die Rotationsachse 6 gegenüber der Horizontalen geneigt verlaufen. Diese Vorgehensweise ist insbesondere dann sinnvoll, wenn die Imprägnierlösung 10 nur an einem der beiden Statorenden auf die Wicklungen 8 aufgebracht wird. Die Imprägnierlösung 10 wird in diesem Fall auf das oberhalb des anderen Statorendes gelegene Statorende aufgebracht. Gegebenenfalls kann in diesem Fall auch eine Imprägnierung in zwei Schritten erfolgen, wobei im ersten Schritt bei schrägstehender Rotationsachse 6 die "obere" Hälfte des Stators 3 imprägniert wird, sodann die Rotorachse verschwenkt wird, so dass das andere Statorende nunmehr höher liegt und im zweiten Schritt bei invers schrägstehender Rotationsachse 6 die zuvor "untere" und nunmehr "obere" Hälfte des Stators 3 imprägniert wird.

Zum Aufbringen der Imprägnierlösung 10 auf die Wicklungen 8 weist die Imprägnieranlage mindestens eine Düse 11 auf, beispielsweise entsprechend der Darstellung in FIG 4 zwei Düsen 11. Mittels der Düsen 11 wird die Imprägnierlösung 10 auf die Wicklungen 8 aufgeträufelt, meist auf mindestens einen der Wicklungsköpfe 9. Während des Aufträufelns wird der Stator 3, wie in FIG 4 durch einen geschwungenen Pfeil angedeutet ist, um die Rotationsachse 6 gedreht.

Die Imprägnieranlage weist weiterhin eine Mischstufe 12 auf. Die Mischstufe 12 ist der Düse 11 bzw. den Düsen 11 vorgeordnet. Der Mischstufe 12 werden über Förderleitungen 13 Komponenten K1, K2, K3 der Imprägnierlösung 10 zugeführt. In der Mischstufe 12 werden die Komponenten K1, K2, K3 zu der Imprägnierlösung 10 gemischt. Von der Mischstufe 12 aus wird sodann die Imprägnierlösung 10 der Düse 11 bzw. den Düsen 11 zugeführt.

Minimal ist die Anzahl an Komponenten K1, K2, K3 gleich zwei. Im Minimalfall sind also beispielsweise nur die Komponenten K1 und K3 vorhanden, nicht aber die Komponente K2. In der Regel ist jedoch die Anzahl an Komponenten K1, K2, K3 mindestens drei. In Verbindung mit (genau) drei Komponenten K1, K2, K3 wird die vorliegende Erfindung nachstehend auch erläutert. Die vorliegende Erfindung ist jedoch nicht auf die Verwendung von (genau) drei Komponenten K1, K2, K3 beschränkt.

Zum Fördern der Komponenten K1, K2, K3 sind den Förderleitungen 13 Fördereinrichtungen 14 zugeordnet. Mittels der Fördereinrichtungen 14 werden die Komponenten K1, K2, K3 in den Förderleitungen 13 zur Mischstufe 12 gefördert. Die Fördereinrichtungen 14 können beispielsweise Pumpen sein. Die Fördereinrichtungen 14 werden von einer Steuereinrichtung 15 gesteuert. Gegebenenfalls wird von der Steuereinrichtung 15 auch die Mischstufe 12 gesteuert, beispielsweise bezüglich einer Dynamik, mit welcher das Mischen der Komponenten K1, K2, K3 erfolgen soll. Die Steuereinrichtung 15 kann auch weitere Steuerfunktionen übernehmen.

Es ist möglich, dass die Fördereinrichtungen 14 von der Steuereinrichtung 15 ohne Rückkopplung gesteuert werden. Oftmals sind jedoch den Förderleitungen 13 Messeinrichtungen 16 zugeordnet, mittels derer als jeweiliges Messsignal beispielsweise ein in der jeweiligen Förderleitung 13 herrschender Druck und/oder ein die jeweilige Förderleitung 13 durchfließender Mengenstrom der jeweiligen Komponente K1, K2, K3 erfasst und der Steuereinrichtung 15 zugeführt werden kann.

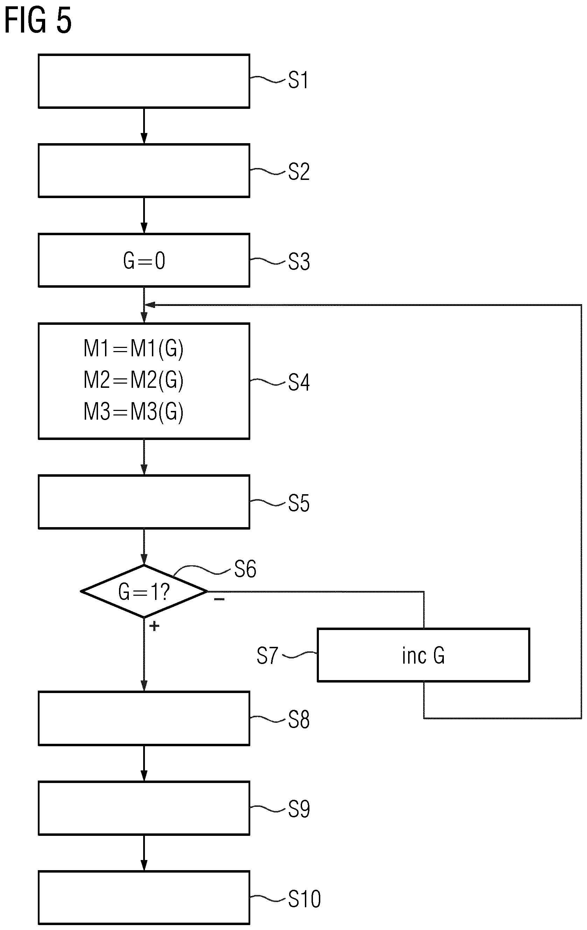

Die Fördereinrichtungen 14 werden von der Steuereinrichtung 15 derart gesteuert, dass Verhältnisse der über die Förderleitungen 13 geförderten Komponenten K1, K2, K3 in Abhängigkeit von der Nutlänge L der Statornuten 7 und/oder einem Füllgrad G der Statornuten 7 eingestellt werden. Dies wird nachstehend in Verbindung mit den FIG 5 bis 7 erläutert.

Gemäß FIG 5 wird in einem Schritt S1 der Stator 3 in der Imprägnieranlage positioniert. Weiterhin werden die Statornuten 7 in üblicher Weise mit sogenanntem Nutkastenpapier und Deckschiebern gekapselt. Der Schritt S1 kann unter Steuerung der Steuereinrichtung 15 ausgeführt werden. Er kann aber alternativ auch ohne Mitwirken der Steuereinrichtung 15 ausgeführt werden.

In einem Schritt S2 beginnt die Steuereinrichtung 15 mit dem Rotieren des Stators 3 um seine Rotationsachse 6. Das Rotieren des Stators 3 wird beibehalten, bis es beendet wird.

In einem Schritt S3 setzt die Steuereinrichtung 15 den Füllgrad G auf den Wert 0. Der Füllgrad G bezieht sich auf das Imprägnieren des gesamten Wicklungssystems, also der Wicklungen 8 einschließlich der Wicklungsköpfe 9.

In einem Schritt S4 ermittelt die Steuereinrichtung 15 Fördermengen M1, M2, M3 für die Komponenten K1, K2, K3. Die Ermittlung erfolgt in Abhängigkeit vom Füllgrad G. Die Quotienten der Fördermengen M1, M2, M3 ergeben direkt die Verhältnisse der Komponenten K1, K2, K3. Im Rahmen der Ermittlung der Fördermengen M1, M2, M3 kann beispielsweise bei Erreichen eines bestimmten Füllgrades G ein Umschalten von einer anfänglichen Zusammensetzung auf eine spätere Zusammensetzung erfolgen. Auch ist es möglich, die Zusammensetzung der Imprägnierlösung 10 in Abhängigkeit vom Füllgrad G in mehreren Stufen oder kontinuierlich zu ändern.

In einem Schritt S5 steuert die Steuereinrichtung 15 die Fördereinrichtungen 14 entsprechend den ermittelten Fördermengen M1, M2, M3 an, so dass die gewünschten Fördermengen M1, M2, M3 gefördert werden. Die gewünschten Fördermengen M1, M2, M3 werden somit der Mischstufe 12 zugeführt, dort zu einer korrespondierenden Menge der Imprägnierlösung 10 gemischt und über die Düse 11 bzw. die Düsen 11 auf die Wicklungen 8 aufgebracht.

Genau genommen werden zu einem bestimmten Zeitpunkt bestimmte Fördermengen M1, M2, M3 der Komponenten K1, K2, K3 der Mischstufe 12 zugeführt, während die Imprägnierlösung 10, die zu diesem Zeitpunkt mittels der Düse 11 bzw. mittels der Düsen 11 auf die Wicklungen 8 aufgeträufelt wird, bereits zu einem früheren Zeitpunkt gemischt wurde. Der Zeitversatz ist jedoch hinreichend klein, so dass er im Rahmen der vorliegenden Erfindung vernachlässigt werden kann. Er korrespondiert mit einem Unterschied im Füllgrad G von unter 10 %, manchmal sogar unter 5 % oder unter 2 %.

In einem Schritt S6 prüft die Steuereinrichtung 15, ob der Füllgrad G den Wert 1 erreicht hat, das Imprägnieren also abgeschlossen ist.

Solange dies nicht der Fall ist, geht die Steuereinrichtung 15 zu einem Schritt S7 über. Im Schritt S7 erhöht die Steuereinrichtung 15 den Füllgrad G entsprechend der im Schritt S5 aufgeträufelten Menge an Imprägnierlösung 10. Sodann geht die Steuereinrichtung 15 zum Schritt S4 zurück.

Wenn der Füllgrad G hingegen den Wert 1 erreicht hat, geht die Steuereinrichtung 15 zu einem Schritt S8 über. Im Schritt S8 beendet die Steuereinrichtung 15 die Ansteuerung der Fördereinrichtungen 14. Es werden also keine weiteren Mengen der Komponenten K1, K2, K3 gefördert.

In einem Schritt S9 beendet die Steuereinrichtung 15 das Rotieren des Stators 3 um seine Rotationsachse 6. Der Schritt S9 ist also das Gegenstück zum Schritt S2.

In einem Schritt S10 wird der Stator 3 aus der Imprägnieranlage entfernt. Der Schritt S10 kann unter Steuerung der Steuereinrichtung 15 ausgeführt werden. Er kann aber alternativ auch ohne Mitwirken der Steuereinrichtung 15 ausgeführt werden. Der Schritt S10 ist also das Gegenstück zum Schritt S1.

Mit der Ausführung des Schrittes S10 ist das Imprägnieren der Wicklung 8 abgeschlossen. Die Schritte S1 bis S10 können daher mit einem weiteren Stator 3 und dessen Wicklung 8 erneut ausgeführt werden.

Mittels der obenstehend in Verbindung mit FIG 5 erläuterten Vorgehensweise wird erreicht, dass Verhältnisse der über die Förderleitungen 13 geförderten Komponenten K1, K2, K3 von der Steuereinrichtung 15 in Abhängigkeit von einem Füllgrad G der Statornuten 7 eingestellt werden. Die chemische Zusammensetzung der Imprägnierlösung 10 wird also während des Imprägnierens der Wicklungen 8 dynamisch variiert. Gemeinsam benutzte Bestandteile der Mischstufe 12 werden in diesem Fall automatisch gespült. Sie müssen nicht separat gereinigt werden. Durch das Variieren in Abhängigkeit von dem Füllgrad G kann beispielsweise zunächst eine Imprägnierlösung 10 verwendet werden, welche ihre Viskosität relativ langsam erhöht, und zu einem späteren Zeitpunkt eine Imprägnierlösung 10 verwendet werden, welche ihre Viskosität relativ schnell erhöht. Im Falle der Verwendung von zwei Düsen 11 (siehe FIG 4) kann aufgrund der anfänglichen Verwendung der Imprägnierlösung 10, welche ihre Viskosität relativ langsam erhöht, erreicht werden, dass die Imprägnierlösung 10 zuverlässig bis in die Mitte der Statornuten 7 fließt. Aufgrund der späteren Verwendung der Imprägnierlösung 10, welche ihre Viskosität relativ schnell erhöht, kann erreicht werden, dass die Imprägnierlösung 10 ab diesem Zeitpunkt relativ schnell hochviskos wird, so dass im Bereich der Wicklungsköpfe 9 relativ schnell keine Gefahr eines Tropfens mehr besteht. Im Falle der Verwendung von nur einer Düse 11 (in FIG 4 nicht dargestellt) kann aufgrund der anfänglichen Verwendung der Imprägnierlösung 10, welche ihre Viskosität relativ langsam erhöht, erreicht werden, dass die Imprägnierlösung 10 zuverlässig bis zum Wicklungskopf 9 auf der gegenüberliegenden Seite fließt. Aufgrund der späteren Verwendung der Imprägnierlösung 10, welche ihre Viskosität relativ schnell erhöht, kann erreicht werden, dass die Imprägnierlösung 10 ab diesem Zeitpunkt relativ schnell hochviskos wird, so dass im Bereich des Wicklungskopfes 9 im Bereich der Düse 11 relativ schnell keine Gefahr eines Tropfens mehr besteht.

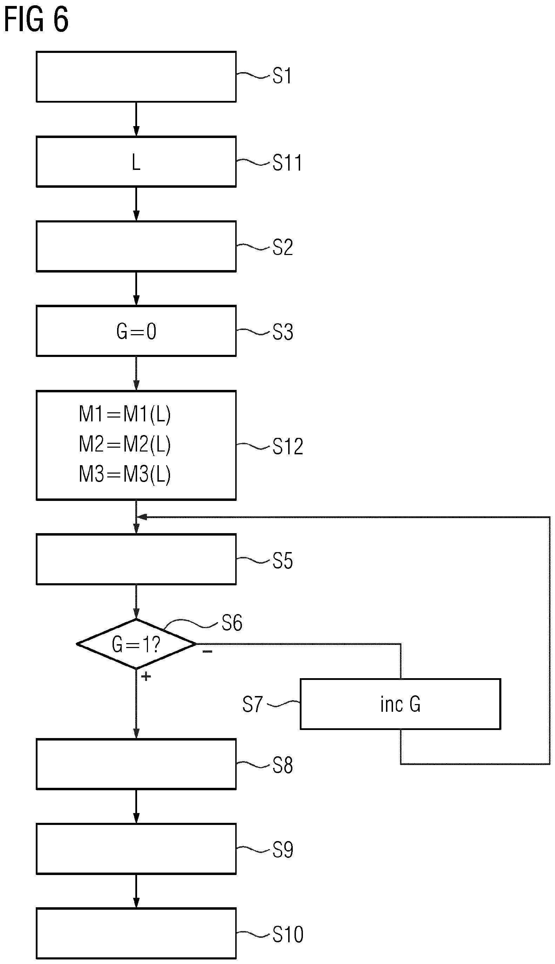

Alternativ zu einer Veränderung der Zusammensetzung der Imprägnierlösung 10 in Abhängigkeit vom Füllgrad G ist möglich, dass Verhältnisse der über die Förderleitungen 13 geförderten Komponenten K1, K2, K3 von der Steuereinrichtung 15 in Abhängigkeit von der Nutlänge L der Statornuten 7 eingestellt werden. In diesem Fall ist die chemische Zusammensetzung der Imprägnierlösung 10 während des Imprägnierens der Wicklungen 8 eines bestimmten Stators 3 zwar statisch stets dieselbe, kann aber von Stator 3 zu Stator 3 dynamisch variiert werden. Dies wird nachstehend in Verbindung mit FIG 6 erläutert.

FIG 6 enthält die Schritte S1 bis S3 und S5 bis S10. Für die Schritte S1 bis S3 und S5 bis S10 wird auf die Ausführungen zu FIG 5 verwiesen.

Zusätzlich ist ein Schritt S11 vorhanden. Der Schritt S11 wird vor dem Schritt S3 ausgeführt. Beispielsweise kann er zwischen den Schritten S1 und S2 ausgeführt werden. Im Schritt S11 nimmt die Steuereinrichtung 15 die Nutlänge L entgegen.

Weiterhin ist der Schritt S4 durch einen Schritt S12 ersetzt. Im Schritt S12 ermittelt die Steuereinrichtung 15 - analog zum Schritt S4 von FIG 5 - die Fördermengen M1, M2, M3 für die Komponenten K1, K2, K3. Im Schritt S12 erfolgt die Ermittlung der Fördermengen M1, M2, M3 jedoch nicht in Abhängigkeit vom Füllgrad G, sondern in Abhängigkeit von der Nutlänge L.

Aufgrund des Umstands, dass die Zusammensetzung der Imprägnierlösung 10 im Rahmen der Vorgehensweise von FIG 6 nicht geändert wird, kann die Steuereinrichtung 15 weiterhin vom Schritt S7 aus direkt zum Schritt S5 zurückgehen. Der Schritt S12 muss also nur einmal ausgeführt werden.

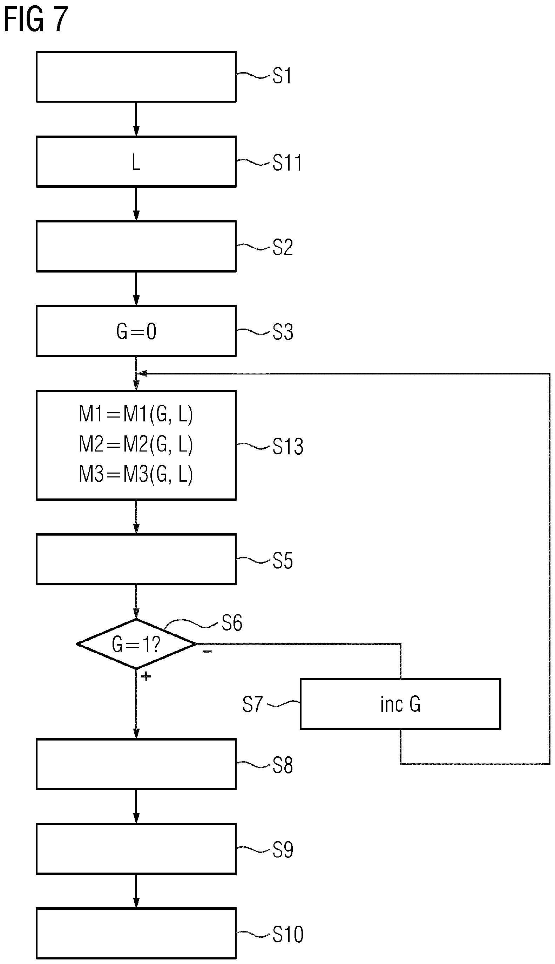

Die Vorgehensweisen von FIG 5 und FIG 6 können auch miteinander kombiniert werden. Dies wird nachstehend in Verbindung mit FIG 7 näher erläutert.

FIG 7 enthält die Schritte S1 bis S3 und S5 bis S11. Für die Schritte S1 bis S3 und S5 bis S10 wird auf die Ausführungen zu FIG 5 verwiesen, für den Schritt S11 auf die Ausführungen zu FIG 6. Der Schritt S12 von FIG 6 ist jedoch durch einen Schritt S13 ersetzt. Im Schritt S13 ermittelt die Steuereinrichtung 15 - analog zum Schritt S4 von FIG 5 und analog zum Schritt S12 von FIG 6 - die Fördermengen M1, M2, M3 für die Komponenten K1, K2, K3. Im Schritt S13 erfolgt die Ermittlung der Fördermengen M1, M2, M3 in Abhängigkeit sowohl vom Füllgrad G als auch von der Nutlänge L.

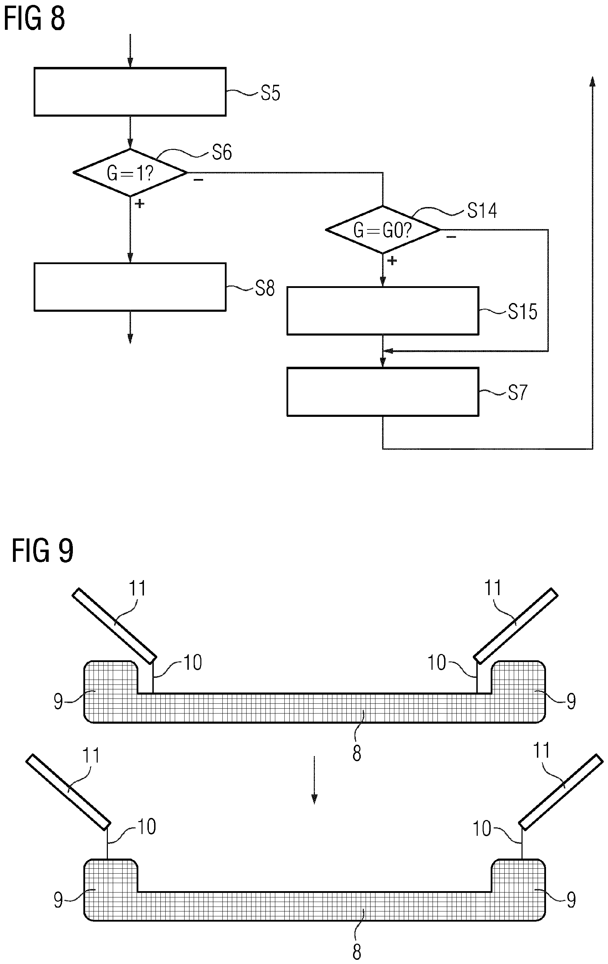

FIG 8 zeigt eine weitere Ausgestaltung, die bei jeder der Vorgehensweisen der FIG 5 bis 7 anwendbar ist.

Gemäß FIG 8 sind zusätzliche Schritte S14 und S15 vorhanden. Die Schritte S14 und S15 können, wie in FIG 8 dargestellt, beispielsweise im NEIN-Zweig des Schrittes S6 dem Schritt S7 vorgeordnet sein. Alternativ können sie dem Schritt S7 nachgeordnet sein oder dem Schritt S5 oder dem Schritt S6 vorgeordnet sein.

Im Schritt S14 prüft die Steuereinrichtung 15, ob der Füllgrad G einen vorbestimmten Wert G0 erreicht hat. Der vorbestimmte Wert G0 kann zwischen 0 und 1 (Grenzen ausgeschlossen) geeignet gewählt werden. Beispielsweise kann er 0,5 = 50 % Nutfüllung, 0,7 = 70 % Nutfüllung, 0,8 = 80 % Nutfüllung, 0,9 = 90 % Nutfüllung oder einen anderen geeigneten Wert aufweisen. Wenn der vorbestimmte Füllgrad G0 erreicht wird, geht die Steuereinrichtung 15 zum Schritt S15 über. Im Schritt S15 variiert die Steuereinrichtung 15 eine Position der Düse 11 bzw. der Düsen 11 relativ zu den Statornuten 7. Anderenfalls wird der Schritt S15 übersprungen.

Die Implementierung der Vorgehensweise von FIG 8 setzt - selbstverständlich - voraus, dass die Düse 11 relativ zum Stator 3 entsprechend bewegbar ist bzw. die Düsen 11 relativ zum Stator 3 bewegbar sind. Das Variieren erfolgt entsprechend der Darstellung in FIG 9 in Richtung der Rotationsachse 6 bzw. allgemein gesprochen in der für die Statornuten 7 einheitlichen Richtung. Zumindest in dieser Richtung muss die Bewegbarkeit der Düse 11 bzw. der Düsen 11 gegeben sein.

Im Rahmen der Vorgehensweise der FIG 8 und 9 können beispielsweise zu Beginn des Füllens der Statornuten 7 mit der Imprägnierlösung 10 die Düsen 11 derart positioniert sein, dass die Imprägnierlösung 10 unmittelbar am Übergang zu den Statornuten 7 auf die Wicklungen 8 aufgeträufelt wird. Mit der Umpositionierung des Schrittes S15 können die Düsen 11 beispielsweise von den Statornuten 7 weggefahren werden, so dass die Imprägnierlösung 10 dem weiter entfernten Bereich der Wicklungsköpfe 9 zugeführt wird.

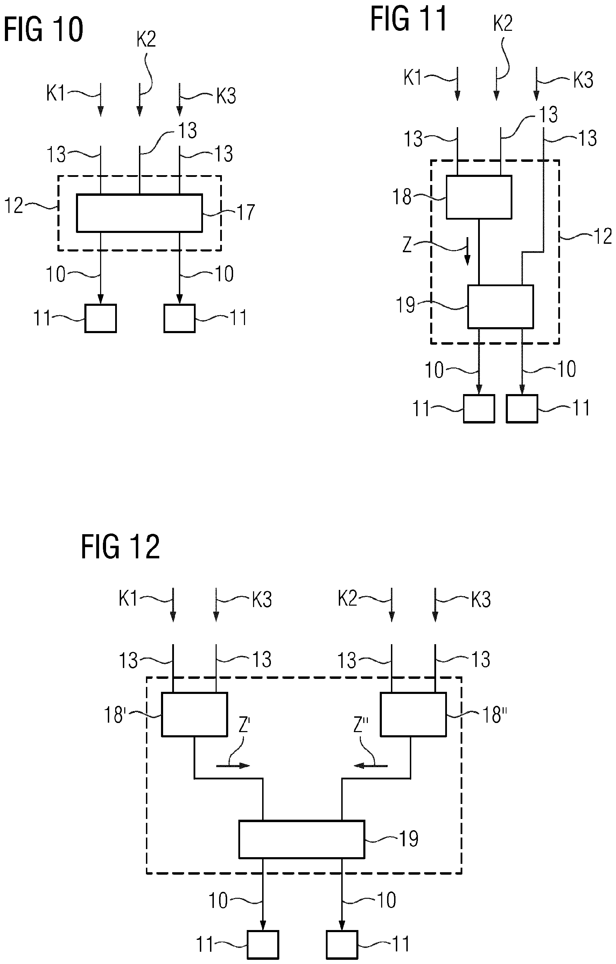

Nachfolgend werden in Verbindung mit den FIG 10 bis 12 mögliche Ausgestaltungen der Mischstufe 12 erläutert.

In der nicht erfindungsgemäßen Ausgestaltung gemäß FIG 10 weist die Mischstufe 12 einen einzigen Mischer 17 auf. Dem Mischer 17 werden in diesem Fall alle Komponenten K1, K2, K3 der Imprägnierlösung 10 in Reinform zugeführt. Der Mischer 17 mischt die ihm in Reinform zugeführten Komponenten K1, K2, K3 in einem einzelnen, für alle Komponenten K1, K2, K3 einheitlichen Mischvorgang zu der Imprägnierlösung 10. Die Ausgestaltung gemäß FIG 10 ist insbesondere realisierbar, wenn nur zwei Komponenten K1, K2, K3 vorhanden sind, beispielsweise die Komponenten K1 und K3 oder die Komponenten K2 und K3. Sie kann im Einzelfall aber auch dann realisierbar sein, wenn mehr als zwei Komponenten K1, K2, K3 vorhanden sind.

In der erfindungsgemäßen Ausgestaltung gemäß FIG 11 weist die Mischstufe 12 einen Vormischer 18 und einen Nachmischer 19 auf. Dem Vormischer 18 werden die Komponenten K1 und K2 zugeführt, aber nicht die Komponente K3. Die Komponenten K1 und K2 werden von dem Vormischer 18 zu einer Zwischenlösung Z gemischt. Der Vormischer 18 führt die Zwischenlösung Z dem Nachmischer 19 zu. Dem Nachmischer 19 werden die Komponenten K1 und K2 also nicht in Reinform zugeführt, sondern nur die Zwischenlösung Z, welche sowohl die Komponente K1 als auch die Komponente K2 enthält. Wenn im dynamischen Einzelfall dem Vormischer 18 temporär nur die Komponente K1 oder nur die Komponente K2 zugeführt wird, enthält natürlich auch die Zwischenlösung Z nur die entsprechende Komponente K1, K2, nicht aber beide Komponenten K1 und K2. Dem Nachmischer 19 wird weiterhin die Komponente K3 zugeführt. Der Nachmischer 19 mischt die Zwischenlösung Z und die Komponente K3 zu der Imprägnierlösung 10 und führt sodann die Imprägnierlösung 10 der Düse 11 bzw. den Düsen 11 zu.

In der alternativen erfindungsgemäßen Ausgestaltung gemäß FIG 12 weist die Mischstufe 12 einen ersten Vormischer 18', einen zweiten Vormischer 18" und den Nachmischer 19 auf. Dem ersten Vormischer 18' werden die Komponenten K1 und K3 zugeführt, aber nicht die Komponente K2. Die Komponenten K1 und K3 werden von dem ersten Vormischer 18' zu einer ersten Zwischenlösung Z' gemischt. Der erste Vormischer 18' führt die erste Zwischenlösung Z' dem Nachmischer 19 zu. Dem zweiten Vormischer 18" werden die Komponenten K2 und K3 zugeführt, aber nicht die Komponente K1. Die Komponenten K2 und K3 werden von dem zweiten Vormischer 18" zu einer zweiten Zwischenlösung Z" gemischt. Der zweite Vormischer 18" führt die zweite Zwischenlösung Z" ebenfalls dem Nachmischer 19 zu. Dem Nachmischer 19 wird also keine der Komponenten K1, K2, K3 in Reinform zugeführt, sondern nur in den in Form der beiden Zwischenlösungen Z', Z" vorliegenden Mischungen. Der Nachmischer 19 mischt die erste Zwischenlösung Z' und die zweite Zwischenlösung Z" zu der Imprägnierlösung 10 und führt sodann die Imprägnierlösung 10 der Düse 11 bzw. den Düsen 11 zu.

Die Komponenten K1, K2 und K3 können nach Bedarf bestimmt sein. Sie werden vorzugsweise derart bestimmt, dass die Imprägnierlösung 10 ihre Viskosität bei Raumtemperatur derart erhöht, dass der Stator 3 nach dem Imprägnieren mit der Imprägnierlösung 10 (aber vor dem vollständigen Aushärten der Imprägnierlösung 10) aus der Imprägnieranlage entnommen werden kann, ohne dass die Imprägnierlösung 10 tropft.

Die Komponente K3 kann insbesondere für jede der obenstehend erläuterten Ausgestaltungen ein Harz sein, beispielsweise ein Epoxidharz oder ein Polyesterharz. Die Komponenten K1 und K2 können insbesondere Härter sein, beispielsweise sogenannte aminische Härter. Es ist möglich, dass für alle Imprägnierlösungen 10 als Komponente K3 ein und dasselbe Harz verwendet wird und die Härter von konkret verwendeter Imprägnierlösung 10 zu konkret verwendeter Imprägnierlösung 10 variieren. Beispiele geeigneter Harze (Komponente K3) und Härter (Komponenten K1 und K2) sind die Harzkomponenten und die Härterkomponenten folgender kommerziell verfügbarer Zweikomponentenharze: Elantas 235 SG, Elantas Epoxylite 5600, Axalta Voltatex 4410, Axalta Voltatex 4411, vonRoll PDR0230. Die genannten Handelsbezeichnungen sind oftmals aufgrund von Marktstrategien der Lieferanten kundenspezifisch angepasst.

Von den Komponenten K1 und K2 ist in der Regel stets mindestens eine in der Imprägnierlösung 10 enthalten. Die Komponente K3 ist in aller Regel stets in der Imprägnierlösung 10 enthalten. Es ist möglich, dass die jeweils verwendete Imprägnierlösung 10 (mit Ausnahme ganz kurzer Übergangszeiträume) zu jedem Zeitpunkt jeweils nur zwei der Komponenten K1, K2, K3 umfasst, also beispielsweise entweder die Komponenten K1 und K3 oder die Komponenten K2 und K3. Alternativ ist es möglich, dass die jeweils verwendete Imprägnierlösung 10 (mit Ausnahme ganz kurzer Übergangszeiträume) die Komponenten K1, K2, K3 zu jedem Zeitpunkt in einem von mehreren fest vorgegebenen Mischungsverhältnissen umfasst, beispielsweise in einem der Mischungsverhältnisse 1-0-1, 0-1-1 und 1-1-2, wobei sich die erste Zahl jeweils auf die Fördermenge M1 bezieht, die zweite Zahl auf die Fördermenge M2 und die dritte Zahl auf die Fördermenge M3. Alternativ ist es möglich, dass die jeweils verwendete Imprägnierlösung 10 die Komponenten K1, K2, K3 in kontinuierlich variablen Mischungsverhältnissen umfasst. Beispielsweise kann die Imprägnierlösung 10 die Komponenten K1, K2, K3 in einem Verhältnis x-y-1 umfassen, wobei x und/oder y beliebige Werte zwischen 0 und 1 annehmen können. Gegebenenfalls kann zusätzlich die Bedingung gelten, dass x und y sich nach einer Wichtung mit einem jeweiligen konstanten Faktor in der Summe zu 1 ergänzen müssen. Auch kann zusätzlich die Bedingung gelten, dass x und y nach einer Wichtung mit einem jeweiligen konstanten Faktor zwischen einer unteren Grenze und einer oberen Grenze liegen müssen, beispielsweise zwischen 0,5 und 2,0 oder zwischen 0,8 und 1,2. Vorzugsweise werden die Fördermengen M1, M2, M3 stets derart bestimmt, dass die sogenannte Aminzahl der Komponente K3 gleich oder zumindest in etwa gleich der resultierenden Aminzahl der Komponenten K1 und K2 zusammen ist.

Die Reaktivität einer Imprägnierlösung 10, die zusätzlich zu einem Anteil der Komponente K3 sowohl einen Anteil der Komponente K1 als auch einen Anteil der Komponente K2 enthält, liegt in der Regel zwischen der Reaktivität einer Imprägnierlösung 10, die zusätzlich zu einem Anteil der Komponente K3 ausschließlich einen Anteil der Komponente K1 oder ausschließlich einen Anteil der Komponente K2 enthält. Die Reaktivität kann linear oder nichtlinear vom Anteil der Komponente K1 und/oder vom Anteil der Komponente K2 abhängen. Gegebenenfalls kann der Steuereinrichtung 15 eine Kennlinie (also die Reaktivität als Funktion des Anteils der Komponente K1 und/oder des Anteils der Komponente K2) vorgegeben sein, um die Fördermengen M1, M2 relativ zur Fördermenge M3 korrekt bestimmen zu können.

Nach dem Imprägnieren wird die auf die Wicklungen 8 geträufelte Imprägnierlösung 10 ausgehärtet. Das Aushärten kann nach Bedarf bei Raumtemperatur oder geringfügig erhöhter Temperatur (beispielsweise bis zu 60 °C) erfolgen. Diese Vorgehensweise ist im Rahmen der vorliegenden Erfindung bevorzugt. Das Aushärten kann aber auch bei deutlich erhöhter Temperatur (beispielsweise bis zu 200 °C) erfolgen. Diese Vorgehensweise ist im Rahmen der vorliegenden Erfindung zwar nicht bevorzugt, soll aber nicht ausgeschlossen sein.

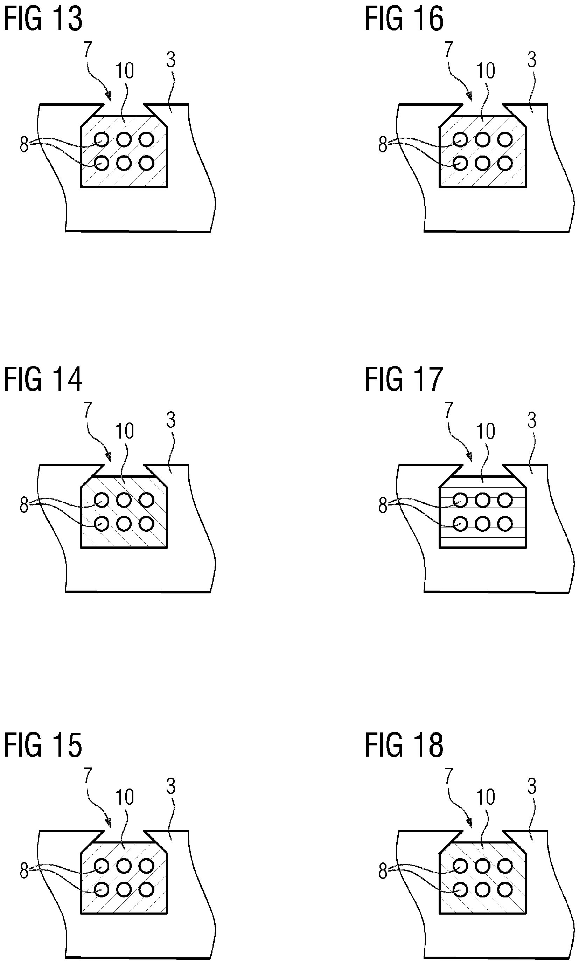

Die FIG 13 bis 15 zeigen jeweils einen Schnitt durch eine Statornut 7 eines Stators 3, bei dem die Imprägnierlösung 10 mittels zwei Düsen 11 aufgeträufelt wurde, wobei je eine der beiden Düsen 11 an je einem der beiden axialen Enden der Statornut 7 angeordnet war. Die Imprägnierlösung 10 ist bereits ausgehärtet. FIG 13 zeigt einen Schnitt durch die Statornut 7 in der Nähe des einen Wicklungskopfes 9, FIG 14 einen Schnitt durch die Statornut 7 in der Mitte der Statornut 7, FIG 15 einen Schnitt durch die Statornut 7 in der Nähe des anderen Wicklungskopfes 9. Die Orte der Schnitte sind in FIG 4 mit entsprechenden römischen Ziffern bezeichnet.

Gemäß den FIG 13 bis 15 weist die ausgehärtete Imprägnierlösung 10 im Bereich der Wicklungsköpfe 9 (FIG 13 und 15) eine erste chemische Zusammensetzung auf, während sie im Mittelbereich (FIG 14) eine zweite chemische Zusammensetzung aufweist. Die zweite chemische Zusammensetzung ist von der ersten chemischen Zusammensetzung verschieden. Dies ist in den FIG 13 bis 15 durch unterschiedliche Schraffuren angedeutet. Die chemischen Zusammensetzungen entsprechen den jeweiligen Fördermengen M1, M2, M3 der Komponenten K1, K2, K3, wie sie gemäß der Vorgehensweise von FIG 5 oder FIG 7 variiert wurden. Von den Windungen der Wicklungen 8 sind in den FIG 13 bis 15 nur einige wenige dargestellt. In aller Regel nehmen die Windungen der Wicklungen 8 einen erheblich größeren Querschnitt ein als die ausgehärtete Imprägnierlösung 10.

In ähnlicher Weise zeigen die FIG 16 bis 18 jeweils einen Schnitt durch eine Statornut 7 eines Stators 3, bei dem die Imprägnierlösung 10 mittels einer einzigen Düse 11 aufgeträufelt wurde, wobei die Düse 11 an einem der beiden axialen Enden der Statornut 7 angeordnet war. Die Imprägnierlösung 10 ist bereits ausgehärtet. FIG 16 zeigt einen Schnitt durch die Statornut 7 in der Nähe des Wicklungskopfes 9, in dessen Nähe die Düse 11 angeordnet war. FIG 17 zeigt einen Schnitt durch die Statornut 7 in der Mitte der Statornut 7, FIG 18 einen Schnitt durch die Statornut 7 in der Nähe des anderen Wicklungskopfes 9. Der Schnitt von FIG 16 korrespondiert mit dem von FIG 13, der von FIG 17 mit dem von FIG 14 und der von FIG 18 mit dem von FIG 15. In den FIG 16 bis 18 sind analog zu den FIG 13 bis 15 nur einige wenige Windungen der Wicklungen 8 dargestellt.

Gemäß den FIG 16 bis 18 weist die ausgehärtete Imprägnierlösung 10 im Bereich des einen Wicklungskopfes 9 (FIG 16) eine erste chemische Zusammensetzung auf, während sie im Bereich des anderen Wicklungskopfes (FIG 18) eine zweite chemische Zusammensetzung aufweist. Die zweite chemische Zusammensetzung ist von der ersten chemischen Zusammensetzung verschieden. Dies ist in den FIG 16 und 18 durch unterschiedliche Schraffuren angedeutet. Die chemischen Zusammensetzungen entsprechen wie zuvor den jeweiligen Fördermengen M1, M2, M3 der Komponenten K1, K2, K3, wie sie gemäß der Vorgehensweise von FIG 5 oder FIG 7 variiert wurden. Die chemische Zusammensetzung der Imprägnierlösung 10 im Mittelbereich der Statornut 7 (FIG 17) kann nach Bedarf sein. Sie kann mit der chemischen Zusammensetzung der Imprägnierlösung 10 im Bereich eines der beiden Wicklungsköpfe 9 übereinstimmen. Alternativ kann es sich um eine weitere chemische Zusammensetzung handeln. Dies ist in FIG 17 durch eine Schraffur angedeutet, die sowohl von der Schraffur in FIG 16 als auch von der Schraffur in FIG 18 verschieden ist.

Wenn mit nur zwei der Komponenten K1, K2, K3 - beispielsweise den Komponenten K1 und K3 - gearbeitet wird, weisen die erste und die zweite chemische Zusammensetzung dieselben chemischen Komponenten, aber in voneinander verschiedenen stöchiometrischen Verhältnissen auf. Wenn mit mindestens drei Komponenten K1, K2, K3 gearbeitet wird, kann - beispielsweise - die erste chemische Zusammensetzung aus der ersten und der dritten chemischen Komponente K1, K3 bestehen, während die zweite chemische Zusammensetzung aus der zweiten und der dritten chemischen Komponente K2, K3 bestehen kann.

Zusammengefasst betrifft die vorliegende Erfindung somit folgenden Sachverhalt:
Ein Aktivteil 3 einer elektrischen Maschine 1 weist eine Mehrzahl von Nuten 7 auf, die sich in einer für die Nuten 7 einheitlichen Richtung über eine Nutlänge L erstrecken, wobei in den Nuten 7 Wicklungen 8 eines Wicklungssystems des Aktivteils 3 angeordnet sind, die an Nutenden in Form von Wicklungsköpfen 9 aus den Nuten 7 herausragen. Eine Imprägnieranlage für das Aktivteil 3 weist mindestens eine Düse 11 auf, mittels derer eine Imprägnierlösung 10 auf die Wicklungen 8 des Wicklungssystems aufgeträufelt wird. Die Imprägnieranlage weist eine der Düse 11 vorgeordnete Mischstufe 12 auf, der über Förderleitungen 13 Komponenten K1, K2, K3 der Imprägnierlösung 10 zugeführt werden, in der die Komponenten K1, K2, K3 zu der Imprägnierlösung 10 gemischt werden und von der aus sodann die Imprägnierlösung 10 der Düse 11 zugeführt wird. Den Förderleitungen 13 sind Fördereinrichtungen 14 zugeordnet, mittels derer die Komponenten K1, K2, K3 in den Förderleitungen 13 gefördert werden. Die Imprägnieranlage weist eine Steuereinrichtung 15 auf, von der die Fördereinrichtungen 14 derart gesteuert werden, dass Verhältnisse der über die Förderleitungen 13 geförderten Komponenten K1, K2, K3 in Abhängigkeit von der Nutlänge L der Nuten 7 und/oder einem Füllgrad G der Nuten 7 eingestellt werden.

Die vorliegende Erfindung weist viele Vorteile auf. Insbesondere kann die Taktzeit der Imprägnieranlage deutlich reduziert werden, ohne eine Beeinträchtigung der Qualität der Imprägnierung der Wicklungen 8 - sei es in der Mitte der Statornuten 7, sei es am Rande der Statornuten 7, sei es im Bereich der Wicklungsköpfe 9 - in Kauf nehmen zu müssen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Imprägnieranlage für ein Aktivteil (3) einer elektrischen Maschine (1), wobei das Aktivteil (3) eine Mehrzahl von Nuten (7) aufweist, die sich in einer für die Nuten (7) einheitlichen Richtung über eine Nutlänge (L) erstrecken, wobei in den Nuten (7) Wicklungen (8) eines Wicklungssystems des Aktivteils (3) angeordnet sind, die an Nutenden in Form von Wicklungsköpfen (9) aus den Nuten (7) herausragen,
- wobei die Imprägnieranlage mindestens eine Düse (11) aufweist, mittels derer eine Imprägnierlösung (10) auf die Wicklungen (8) des Wicklungssystems aufgeträufelt wird,
- wobei die Imprägnieranlage eine der Düse (11) vorgeordnete Mischstufe (12) aufweist, der über Förderleitungen (13) Komponenten (K1, K2, K3) der Imprägnierlösung (10) zugeführt werden, in der die Komponenten (K1, K2, K3) zu der Imprägnierlösung (10) gemischt werden und von der aus sodann die Imprägnierlösung (10) der Düse (11) zugeführt wird,
- wobei den Förderleitungen (13) Fördereinrichtungen (14) zugeordnet sind, mittels derer die Komponenten (K1, K2, K3) in den Förderleitungen (13) gefördert werden, und
- wobei die Imprägnieranlage eine Steuereinrichtung (15) aufweist, von der die Fördereinrichtungen (14) derart gesteuert werden, dass Verhältnisse der über die Förderleitungen (13) geförderten Komponenten (K1, K2, K3) in Abhängigkeit von der Nutlänge (L) der Nuten (7) und/oder einem Füllgrad (G) der Nuten (7) eingestellt werden,
- wobei die Mischstufe (12) einen Vormischer (18) und einen Nachmischer (19) aufweist,
- wobei dem Vormischer (18) eine erste und eine zweite Komponente (K1, K2) der Imprägnierlösung (10) zugeführt werden, die von dem Vormischer (18) zu einer Zwischenlösung (Z) gemischt werden, und
- wobei dem Nachmischer (19) die Zwischenlösung (Z) und mindestens eine dritte Komponente (K3) der Imprägnierlösung (10) zugeführt werden, die von dem Nachmischer (19) zu der Imprägnierlösung (10) gemischt werden.

2. Imprägnieranlage für ein Aktivteil (3) einer elektrischen Maschine (1), wobei das Aktivteil (3) eine Mehrzahl von Nuten (7) aufweist, die sich in einer für die Nuten (7) einheitlichen Richtung über eine Nutlänge (L) erstrecken, wobei in den Nuten (7) Wicklungen (8) eines Wicklungssystems des Aktivteils (3) angeordnet sind, die an Nutenden in Form von Wicklungsköpfen (9) aus den Nuten (7) herausragen,
- wobei die Imprägnieranlage mindestens eine Düse (11) aufweist, mittels derer eine Imprägnierlösung (10) auf die Wicklungen (8) des Wicklungssystems aufgeträufelt wird,
- wobei die Imprägnieranlage eine der Düse (11) vorgeordnete Mischstufe (12) aufweist, der über Förderleitungen (13) Komponenten (K1, K2, K3) der Imprägnierlösung (10) zugeführt werden, in der die Komponenten (K1, K2, K3) zu der Imprägnierlösung (10) gemischt werden und von der aus sodann die Imprägnierlösung (10) der Düse (11) zugeführt wird,
- wobei den Förderleitungen (13) Fördereinrichtungen (14) zugeordnet sind, mittels derer die Komponenten (K1, K2, K3) in den Förderleitungen (13) gefördert werden, und
- wobei die Imprägnieranlage eine Steuereinrichtung (15) aufweist, von der die Fördereinrichtungen (14) derart gesteuert werden, dass Verhältnisse der über die Förderleitungen (13) geförderten Komponenten (K1, K2, K3) in Abhängigkeit von der Nutlänge (L) der Nuten (7) und/oder einem Füllgrad (G) der Nuten (7) eingestellt werden,
- wobei die Mischstufe (12) einen ersten Vormischer (18'), einen zweiten Vormischer (18") und einen Nachmischer (19) aufweist,
- wobei dem ersten Vormischer (18') eine erste und eine dritte Komponente (K1, K3) der Imprägnierlösung (10) zugeführt werden, die von dem ersten Vormischer (18') zu einer ersten Zwischenlösung (Z') gemischt werden,
- wobei dem zweiten Vormischer (18") eine zweite und die dritte Komponente (K2, K3) der Imprägnierlösung (10) zugeführt werden, die von dem zweiten Vormischer (18") zu einer zweiten Zwischenlösung (Z") gemischt werden, und
- wobei dem Nachmischer (19) die erste und die zweite Zwischenlösung (Z', Z") zugeführt werden, die von dem Nachmischer (19) zu der Imprägnierlösung (10) gemischt werden.

3. Imprägnieranlage nach einem der obigen Ansprüche,
**dadurch gekennzeichnet,**
**dass** die Düse (11) zumindest in der für die Nuten (7) einheitlichen Richtung relativ zum Aktivteil (3) bewegbar ist und dass die Steuereinrichtung (15) derart ausgebildet ist, dass sie eine Position der Düse (11) relativ zu den Nuten (7) in Abhängigkeit von dem Füllgrad (G) variiert.

4. Elektrische Maschine,
- wobei die elektrische Maschine ein Aktivteil (3) aufweist,
- wobei das Aktivteil (3) eine Mehrzahl von Nuten (7) aufweist, die sich in einer für die Nuten (7) einheitlichen Richtung über eine Nutlänge (L) erstrecken,
- wobei in den Nuten (7) Wicklungen (8) eines Wicklungssystems des Aktivteils (3) angeordnet sind, die an Nutenden in Form von Wicklungsköpfen (9) aus den Nuten (7) herausragen,
- wobei die Wicklungen (8) mittels einer Imprägnieranlage nach einem der Ansprüche 1-3 mit einer ausgehärteten Imprägnierlösung (10) imprägniert sind,
**dadurch gekennzeichnet,**
**dass** die ausgehärtete Imprägnierlösung (10) im Bereich des Wicklungskopfes (9) an einem ersten Nutende der Nuten (7) eine erste chemische Zusammensetzung und im Bereich des Wicklungskopfes (9) an einem zweiten Nutende der Nuten (7) eine von der ersten chemischen Zusammensetzung verschiedene zweite chemische Zusammensetzung aufweist.

5. Elektrische Maschine nach Anspruch 4,
**dadurch gekennzeichnet,**
**dass** die erste und die zweite chemische Zusammensetzung dieselben chemischen Komponenten (K1, K2, K3) in voneinander verschiedenen stöchiometrischen Verhältnissen aufweisen.

6. Elektrische Maschine nach Anspruch 4,
**dadurch gekennzeichnet,**
**dass** die erste chemische Zusammensetzung aus einer ersten und einer dritten chemischen Komponente (K1, K3) besteht und dass die zweite chemische Zusammensetzung aus einer zweiten und der dritten chemischen Komponente (K2, K3) besteht.

## Claims

1. Impregnating system for an active part (3) of an electric machine (1), wherein the active part (3) has a plurality of grooves (7) which extend over a groove length (L) in a direction which is consistent for the grooves (7), wherein windings (8) of a winding system of the active part (3) are arranged in the grooves (7), which windings protrude from the grooves (7) at groove ends in the form of winding heads (9),
- wherein the impregnating system has at least one nozzle (11), by means of which an impregnating solution (10) is sprinkled on the windings (8) of the winding system,
- wherein the impregnating system has a mixing level (12) which precedes the nozzle (11) to which mixing level components (K1, K2, K3) of the impregnating solution (10) are supplied via conveying lines (13), in which the components (K1, K2, K3) are mixed to form the impregnating solution (10) and from which the impregnating solution (10) is then supplied to the nozzle (11),
- wherein the conveying lines (13) are assigned conveying facilities (14), by means of which the components (K1, K2, K3) are conveyed in the conveying lines (13), and
- wherein the impregnating system has a control facility (15), by which the conveying facilities (14) are controlled such that ratios of the components (K1, K2, K3) conveyed by the conveying lines (13) are set depending on the groove length (L) of the grooves (7) and/or a fill level (G) of the grooves (7),
- wherein the mixing level (12) has a pre-mixer (18) and a post-mixer (19),
- wherein a first and a second component (K1, K2) of the impregnating solution (10) are supplied to the pre-mixer (18) and are mixed by the pre-mixer (18) to form an intermediate solution (Z), and
- wherein the intermediate solution (Z) and at least a third component (K3) of the impregnating solution (10) are supplied to the secondary mixer (19) and are mixed by the secondary mixer (19) to form the impregnating solution (10).

2. Impregnating system for an active part (3) of an electric machine (1), wherein the active part (3) has a plurality of grooves (7), which extend over a groove length (L) in a direction which is consistent for the grooves (7), wherein windings (8) of a winding system of the active part (3) are arranged in the grooves (7), which windings protrude from the grooves (7) at groove ends in the form of winding heads (9),
- wherein the impregnating system has at least one nozzle (12), by means of which an impregnating solution (10) is sprinkled on the windings (8) of the winding system,
- wherein the impregnating system has a mixing level (12) which precedes the nozzle (11) and to which mixing level components (K1, K2, K3) of the impregnating solution (10) are supplied via conveying lines (13), in which the components (K1, K2, K3) are mixed to form the impregnating solution (10) and from which the impregnating solution (10) is then supplied to the nozzle (11),
- wherein the conveying lines (13) are assigned conveying facilities (14), by means of which the components (K1, K2, K3) are conveyed in the conveying lines (13), and
- wherein the impregnating system has a control facility (15), by which the conveying facilities (14) are controlled such that ratios of the components (K1, K2, K3) conveyed by the conveying lines (13) are set depending on the groove length (L) of the grooves (7) and/or a fill level (G) of the grooves (7),
- wherein the mixing level (12) has a first pre-mixer (18'), a second pre-mixer (18") and a post-mixer (19),
- wherein a first and a third component (K1, K3) of the impregnating solution (10) are supplied to the first pre-mixer (18') and are mixed by the first pre-mixer (18') to form a first intermediate solution (Z'),
- wherein a second and the third component (K2, K3) of the impregnating solution (10) are supplied to the second pre-mixer (18") and are mixed by the second pre-mixer (18") to form a second intermediate solution (Z"), and
- wherein the first and the second intermediate solution (Z', Z") are supplied to the secondary mixer (19) and are mixed by the post-mixer (19) to form the impregnating solution (10).

3. Impregnating system according to one of the above claims, **characterised in that** the nozzle (11) can be moved in the direction relative to the active part (3) which is consistent for the grooves and that the control facility (15) is embodied such that it varies a position of the nozzle (11) relative to the grooves (7) depending on the fill level (G).

4. Electric machine,
- wherein the electric machine has an active part (3),
- wherein the active part has a plurality of grooves (7) which extend over a groove length (L) in a direction which is consistent with the grooves (7),
- wherein windings (8) of a winding system of the active part (3) are arranged in the grooves (7), which windings protrude from the grooves (7) at groove ends in the form of winding heads (9),
- wherein the windings (8) are impregnated with a cured impregnating solution (10) by means of an impregnating system according to one of claims 1-3,
**characterised in that**,
in the region of the winding head (9) at a first groove end of the grooves (7), the cured impregnating solution (10) has a first chemical composition and, in the region of the winding head (9) at a second groove end of the grooves (7), the cured impregnating solution has a second chemical composition which is different from the first chemical composition.

5. Electrical machine according to claim 4,
**characterised in that**
the first and second chemical composition have the same chemical components (K1, K2, K3) in stoichiometric ratios which are different from one another.

6. Electrical machine according to claim 4,
**characterised in that**
the first chemical composition consists of a first and a third chemical component (K1, K3) and that the second chemical composition consists of a second and the third chemical components (K2, K3).

## Revendications

1. Installation d'imprégnation d'une partie (3) active d'une machine (1) électrique, dans laquelle la partie (3) active a une pluralité d'encoches (7), qui s'étendent, dans une direction unitaire pour les encoches (7), sur une longueur (L) d'encoche, dans laquelle, dans les encoches (7), sont disposés des enroulements (8) d'un système d'enroulement de la partie (3) active, qui, aux extrémités des encoches, sortent des encoches (7) sous la forme de têtes (9) d'enroulement,
- dans laquelle l'installation d'imprégnation a au moins une buse (11), au moyen de laquelle on instille une solution (10) d'imprégnation sur les enroulements (8) du système d'enroulement,
- dans laquelle l'installation d'imprégnation a un étage (12) de mélange, qui est disposé en amont de la buse (11), auquel des composants (K1, K2, K3) de la solution (10) d'imprégnation sont envoyés par des conduits (13) de transport, dans lequel les composants (K1, K2, K3) sont mélangés en la solution (10) d'imprégnation et duquel la solution (10) d'imprégnation est envoyée immédiatement à la buse (11),
- dans laquelle aux conduits (13) de transport sont affectés des dispositifs (14) de transport, au moyen desquels les composants (K1, K2, K3) sont transportés dans les conduits (13) de transport, et
- dans laquelle l'installation d'imprégnation a un dispositif (15) de commande, par lequel les dispositifs (14) de transport sont commandés de manière à régler des rapports des composants (K1, K2, K3), transportés par les conduits (13) de transport, en fonction de la longueur (L) des encoches (7) et/ou d'un degré (G) de remplissage des encoches (7),
- dans laquelle l'étage (12) de mélange a un pré-mélangeur (18) et un post-mélangeur (19),
- dans laquelle il est envoyé au pré-mélangeur (18) un premier et un deuxième composants (K1, K2) de la solution (10) d'imprégnation, qui sont mélangés par le pré-mélangeur (18) en une solution (Z) intermédiaire, et
- dans laquelle il est envoyé au post-mélangeur (19) la solution (Z) intermédiaire et au moins un troisième composant (K3) de la solution (10) d'imprégnation, qui sont mélangés par le post-mélangeur (19) en la solution (10) d'imprégnation.

2. Installation d'imprégnation d'une partie (3) active d'une machine (1) électrique, dans laquelle la partie (3) active a une pluralité d'encoches (7), qui s'étendent, dans une direction unitaire pour les encoches (7), sur une longueur (L) d'encoche, dans laquelle, dans les encoches (7), sont disposés des enroulements (8) d'un système d'enroulement de la partie (3) active, qui, aux extrémités des encoches, sortent des encoches (7) sous la forme de têtes (9) d'enroulement,
- dans laquelle l'installation d'imprégnation a au moins une buse (11), au moyen de laquelle on instille une solution (10) d'imprégnation sur les enroulements (8) du système d'enroulement,
- dans laquelle l'installation d'imprégnation a un étage (12) de mélange, qui est disposé en amont de la buse (11), auquel des composants (K1, K2, K3) de la solution (10) d'imprégnation sont envoyés par des conduits (13) de transport, dans lequel les composants (K1, K2, K3) sont mélangés en la solution (10) d'imprégnation et duquel la solution (10) d'imprégnation est envoyée immédiatement à la buse (11),
- dans laquelle aux conduits (13) de transport sont affectés des dispositifs (14) de transport, au moyen desquels les composants (K1, K2, K3) sont transportés dans les conduits (13) de transport, et
- dans laquelle l'installation d'imprégnation a un dispositif (15) de commande, par lequel les dispositifs (14) de transport sont commandés de manière à régler des rapports des composants (K1, K2, K3), transportés par les conduits (13) de transport, en fonction de la longueur (L) des encoches (7) et/ou d'un degré (G) de remplissage des encoches (7),
- dans laquelle l'étage (12) de mélange a un premier pré-mélangeur (18'), un deuxième pré-mélangeur (18") et un post-mélangeur (19),
- dans laquelle il est envoyé au premier pré-mélangeur (18'), un premier et un troisième composants (K1, K3) de la solution (10) d'imprégnation, qui sont mélangés par le premier pré-mélangeur (18') en une première solution (Z') intermédiaire,
- dans laquelle il est envoyé au deuxième pré-mélangeur (18") un deuxième et le troisième composants (K2, K3) de la solution (10) d'imprégnation, qui sont mélangés par le deuxième pré-mélangeur (18") en une deuxième solution (Z") intermédiaire, et
- dans laquelle il est envoyé au post-mélangeur (19) la première et la deuxième solutions (Z', Z") intermédiaires, qui sont mélangées par le post-mélangeur (19) en la solution (10) d'imprégnation.

3. Installation d'imprégnation suivant l'une des revendications précédentes,
**caractérisée**
**en ce que** la buse (11) est mobile par rapport à la partie (3) active au moins dans la direction unitaire pour les encoches (7) et **en ce que** le dispositif (15) de commande est constitué de manière à faire varier une position de la buse (11) par rapport aux encoches (7) en fonction du degré (G) de remplissage.

4. Machine électrique,
- dans laquelle la machine électrique a une partie (3) active,
- dans laquelle la partie (3) active a une pluralité d'encoches (7), qui s'étendent, dans une direction unitaire pour les encoches (7), sur une longueur (L) d'encoche,
- dans laquelle, dans les encoches (7), sont disposés des enroulements (8) d'un système d'enroulement de la partie (3) active, qui, aux extrémités des encoches, font saillie des encoches (7) sous la forme de têtes (9) d'enroulement,
- dans laquelle les enroulements (8) sont imprégnés d'une solution (10) d'imprégnation durcie au moyen d'une installation d'imprégnation suivant l'une des revendications 1 à 3,
**caractérisée**
**en ce que** la solution (10) d'imprégnation durcie a, dans la partie de la tête (9) d'enroulement à une première extrémité des encoches (7), une première composition chimique et, dans la partie de la tête (9) d'enroulement à une deuxième extrémité des encoches (7), une deuxième composition chimique différente de la première composition chimique.

5. Machine électrique suivant la revendication 4, **caractérisée**
**en ce que** la première et la deuxième compositions chimiques ont les mêmes composants (K1, K2, K3) chimiques en des rapports stœchiométriques différents les uns des autres.

6. Machine électrique suivant la revendication 4, **caractérisée**
**en ce que** la première composition chimique est constituée d'un premier et d'un troisième composants (K1, K3) chimiques et **en ce que** la deuxième composition chimique est constituée et d'un deuxième et du troisième composants (K2, K3) chimiques.
